# EUROPÄISCHE PATENTSCHRIFT

(11) **EP 4 168 730 B1**
(45) Veröffentlichungstag und Bekanntmachung des Hinweises auf die Patenterteilung: **10.07.2024**
(21) Anmeldenummer: 21707634.8
(22) Anmeldetag: 18.02.2021
(51) Int. Cl.: G01B 5/02, G01D 1/12

(54) **POSITIONSANZEIGEVORRICHTUNG FÜR EIN TRAGELEMENT**
POSITION-INDICATING DEVICE FOR A SUPPORT ELEMENT
DISPOSITIF INDICATEUR DE POSITION POUR ÉLÉMENT DE SUPPORT

(30) Priorität: 19.06.2020 DE 102020116261
(43) Veröffentlichungstag der Anmeldung: 26.04.2023
(73) Patentinhaber: Lisega SE, 27404 Zeven (DE)
(72) Erfinder: LALLEMAND, Hervé, 91570 BEVRES (FR)
(74) Vertreter: Lippert Stachow Patentanwälte Rechtsanwälte
(86) Internationale Anmeldenummer: PCT/EP2021/053994
(87) Internationale Veröffentlichungsnummer: WO 2021/254666

(56) Entgegenhaltungen:
- WO-A1-99/06790
- JP-U- S5 714 803
- ARTIKEL: "PRODUKT DATENBLATT", 12 December 2018 (2018-12-12), pages 1 - 1, XP055796321, Retrieved from the Internet <URL:https://www.pesola.com/data/media/images/cms/Produktdatenblatt-Federwaage-Macro-Linie-80005.pdf> [retrieved on 20210416]
- "https://web.archive.org/web/20181212111643/https://www.pesola.com/", 12 December 2018 (2018-12-12), XP002802720, Retrieved from the Internet <URL:https://web.archive.org/web/20181212111643/https://www.pesola.com/> [retrieved on 20210416]

## Beschreibung

Die Erfindung betrifft eine Positionsanzeigevorrichtung zur Anzeige der Bewegung eines, relativ zu einem feststehenden Abschnitt beweglichen Abschnitts eines Tragelementes, insbesondere eines Feder- oder Konstanthängers, einer Stoßbremse, eines Schwingungsdämpfers. Feder-oder Konstanthänger werden zum Abtragen der Gewichtslasten von Rohrleitungen, Behältern und anderen Anlageteilen eingesetzt, Schwingungsdämpfer sollen auftretende Schwingungen reduzieren, Stoßbremsen werden zum Schutz von Anlagen gegen Erdbeben, Wasserschlägen, Rohrbrüchen oder Druckstößen in Rohrleitungssystemen eingesetzt, ohne dass sie die langsamen, insbesondere thermisch bedingten Bewegungen der zu schützenden Bauteile behindern.

Derartige herkömmliche Tragelemente weisen, teilweise normgefordert, eine Weg- bzw. Positionsanzeige auf, welche die aktuelle Position des beweglichen Abschnittes des Tragelements anzeigt. Je nach Anwendungsfall bzw. Einbaulage des Tragelements kann anwenderseitig das Ablesen der Weganzeige eingeschränkt sein, beispielsweise im Bereich von kerntechnischen, chemischen oder anderen explosionsgefährdeten Anlagen. Darüber hinaus besteht bei der Anwendung von Tragelementen wie Stoßbremsen u.U. die Anforderung, nicht nur das aktuelle Bewegungsverhalten des zu tragenden Bauelementes, beispielsweise einer Rohrleitung anzuzeigen, sondern grundsätzlich das Bewegungsmuster bzw. -verhalten des getragenen Bauelementes anzugeben. Eine herkömmliche elektronische Positionsanzeige ist in der Vielzahl der obenstehend angegebenen Anwendungen, beispielsweise in kerntechnischen Anlagen in Folge von Halbleiter- schädigender Strahlung und/oder in anderen Anlagen aufgrund eines notwendigen Explosionsschutzes technisch nur schwer realisierbar bzw. der hierzu notwendige technische Aufwand für eine elektronische Überwachung bzw. Positionsanzeige kostenintensiv.

Die JP S57 14803 betrifft eine Positionsanzeigevorrichtung für eine Trageinrichtung zur Anzeige der Bewegung eines Abschnitts eines Tragelements relativ zu einem feststehenden Abschnitt des Tragelements. Diese Positionsanzeigevorrichtung weist eine, an dem feststehenden Abschnitt des Tragelements befestigbare Zeigeranzeige mit einem schwenkbaren Zeiger auf, wobei ein an einem beweglichen Abschnitt des Tragelements angeordneter Mitnehmer in den Zeiger eingreift und den Zeiger bei einer relativen Bewegung der beiden Abschnitte des Tragelements zueinander zum Verschwenken aus seiner aktuellen Position mitnimmt. Das Produktdatenblatt "Federwaage Macro Line 80005" der Firma Pesola^{®} betrifft eine Federwaage, bei welcher ein bei der Nutzung der Waage feststehender, mit einem Griff versehener hohlzylinderförmiger Teil einen hierzu beweglichen zylinderförmigen Teil aufnimmt, der mittels einer mechanischen Feder an dem feststehenden Teil der Waage befestigt ist. Der feststehende, hohlzylinderförmige Teil weist einen Längsschlitz auf, durch welchen eine am beweglichen Teil radial nach außen sich erstreckende Zeigerschraube angeordnet ist, die sich radial durch den Schlitz der Zylinderhülse erstreckt und bei einer relativen Verlagerung des feststehenden und des beweglichen Teils der Waage zueinander einen außen zur Zylinderhülse angeordneten Schleppzeiger mitnimmt zur permanenten Anzeige eines am beweglichen Teil der Federwaage angebrachten Gewichts auch nach der Entfernung des Gewichts.

Der vorliegenden Erfindung liegt die Aufgabe zugrunde,die Funktionalität einer herkömmlichen Positionsanzeigevorrichtungen zur Anzeige der Position eines beweglichen Abschnittes eines Tragelementes zu verbessern und darüber hinaus die Baugröße der Vorrichtung zu vermindern.

Diese Aufgabe löst die vorliegende Erfindung mit einer Positionsanzeigevorrichtung mit den Merkmalen von Anspruch 1. Die erfindungsgemäße Positionsanzeigevorrichtung umfasst eine mechanische Bewegungsübertragungseinrichtung, die eingangsseitig an das Tragelement befestigbar ist, zur Übertragung der Bewegung des beweglichen Abschnitts des Tragelements, eine Anzeigeeinrichtung zur Anzeige der Bewegung des beweglichen Abschnittes der Trageinrichtung, wobei die Bewegungsübertragungseinrichtung ausgangsseitig an die Anzeigeeinrichtung (20) angekoppelt ist und die Anzeigeeinrichtung einen Hohlzylinder und einen in dem Hohlzylinder beweglich gelagerten und mit der Bewegungsübertragungseinrichtung bewegungsgekoppelten Mitnehmer aufweist, und wobei der Hohlzylinder einen Längsschlitz umfasst, in welchem sich ein mit dem Mitnehmer mitbewegter, radial nach außen verlaufender Querbolzen erstreckt, der ausgebildet ist, zumindest eine radial außen zum Hohlzylinder angeordnete Extremwertanzeigeeinrichtung bzw. einen Abschnitt derselben insbesondere axial zu verschieben.

Der Erfindung liegt die grundlegende Idee zugrunde, eine Positionsanzeigevorrichtung für ein Tragelement wie einen Feder- oder Konstanthänger, eine Stoßbremse oder einen Schwingungsdämpfer insbesondere für die angegebenen kritischen Anwendungsbereiche rein mechanisch auszubilden, wobei die erfindungsgemäße Positionsanzeigevorrichtung neben der Anzeige einer aktuellen Position, d.h. einer Momentanposition, des beweglichen Abschnitts des Tragelementes ferner ausgebildet sein kann, zumindest eine Extremwertposition anzuzeigen, welche von dem beweglichen Abschnitt des Tragelements in einem vergangenen Zeitabschnitt eingenommen wurde oder gerade eingenommen wird. Eine solche Extremwertanzeige kann beispielsweise eine Amplitudenwertanzeige darstellen bei Tragelementen, deren beweglicher Abschnitt durch äußere Anregung eine Bewegung ausführt, wobei die Momentanauslenkung aus einer Ruhelage in diesem Fall als Elongation bezeichnet wird. Zweckmäßigerweise kann vorgesehen sein, dass die erfindungsgemäße Positionsanzeigevorrichtung so ausgebildet ist, dass der Anzeigewert der Extremwertanzeige verändert wird, wenn sich eine aktuelle Position über einen vergangenen Extremwert hinaus erstreckt. Es kann vorgesehen sein, dass der radial nach außen verlaufende Querbolzen zum einen eine Mitnahmefunktionalität in Bezug auf die Extremwertanzeige aufweist und darüber hinaus ausgebildet ist, eine Momentanposition des beweglichen Abschnitts des Tragelements anzuzeigen. Es kann jedoch auch vorgesehen sein, dass der innerhalb des Hohlzylinders bewegte Mitnehmer anzeigend für eine Momentanposition des beweglichen Abschnitts des Tragelements ausgebildet ist. Je nach Ausführungsform kann der Querbolzen beispielsweise stabartig, im Schnitt senkrecht zu dessen Längserstreckung insbesondere zylinderförmig oder auch eckig ausgebildet sein.

Dadurch, dass die erfindungsgemäße Positionsanzeigevorrichtung vorzugsweise rein mechanische Bauelemente, insbesondere ohne elektronische Bauelemente ausgebildet sein kann, eignet sich die erfindungsgemäße Positionsanzeigevorrichtung insbesondere für die obenstehend beschriebenen kritischen Anwendungsbereiche, wobei die Bewegungsübertragungseinrichtung in Bezug auf ihre Baulänge anwendungsbezogen ausgebildet sein kann, beispielsweise um eine Positions- bzw. Weganzeige außerhalb eines beschriebenen kritischen Anwendungsbereichs bereitzustellen, insbesondere unter Vermeidung elektronischer Bauteile zur Vermeidung einer Explosionsgefahr und/oder zur Erhöhung der Ausfallsicherheit insbesondere innerhalb kerntechnischer Anlagen.

Weitere erfindungsgemäße Merkmale und Weiterbildungen der erfindungsgemäßen Positionsanzeigevorrichtung sind in der nachfolgenden allgemeinen Beschreibung, den Figuren, der Figurenbeschreibung sowie den Unteransprüchen angegeben.

Zweckmäßigerweise kann vorgesehen sein, dass der Querbolzen am Mitnehmer, insbesondere starr am Mitnehmer befestigt ist. Beispielsweise kann der Mitnehmer transversal zur Bewegungsrichtung des Mitnehmers an diesem angeordnet sein, insbesondere sich durch diesen hindurch erstrecken.

Um eine möglichst symmetrische Krafteinleitung vom Mitnehmer auf die radial außen zum Hohlzylinder angeordnete Extremwertanzeige bereitzustellen, kann zweckmäßigerweise vorgesehen sein, dass der Hohlzylinder einen weiteren Längsschlitz aufweist. Dieser weitere Längsschlitz kann radial gegenüberliegend zum ersten Längsschlitz angeordnet sein, wobei der Mitnehmer eine radiale Erstreckung derart aufweisen kann, dass er sich durch beide Längsschlitze hindurch erstreckt radial nach außen, wobei beide radiale Endabschnitte des Mitnehmers ausgebildet sein können, sich an die besagte Extremwertanzeige anzulegen und diese insbesondere in axialer Richtung, d.h. in Bewegungsrichtung des Mitnehmers zu verschieben, insbesondere um Verkantungen in der Mechanik der erfindungsgemäßen Positionsanzeigevorrichtung zu vermeiden.

Zur Kopplung der Bewegungsübertragungseinrichtung an die Anzeigeeinrichtung kann erstere zur Befestigung an den beweglichen Abschnitt des Tragelements ausgebildet sein. In einer anderen Ausführungsform kann auch vorgesehen sein, die Bewegungsübertragungseinrichtung so auszubilden, dass sie an dem feststehenden Abschnitt des Tragelements befestigbar ist, insbesondere bei solchen Ausführungsformen, bei welchen die Anzeigeeinrichtung an dem beweglichen Abschnitt des Tragelements befestigt und mit diesem bewegt wird.

In einer einfachen ausgestalteten Ausführungsform kann vorgesehen sein, dass die Bewegungsübertragungseinrichtung eingerichtet ist, eine eingangsseitig abgegriffene Translationsbewegung in eine ausgangsseitige Translationsbewegung zu übertragen. Eingangsseitig kann dabei die Bewegungsübertragungseinrichtung an den beweglichen oder den unbeweglichen Abschnitt des Tragelements befestigt sein und ausgangsseitig an der Anzeigeeinrichtung. Je nach Ausführungsform kann die Bewegungsübertragungseinrichtung ausgebildet sein, eine eingangsseitig abgegriffene Translationsbewegung eins zu eins in einer ausgangsseitige Translationsbewegung zu übertragen. Es liegt jedoch auch im Rahmen der Erfindung, die Bewegungsübertragungseinrichtung so auszubilden, dass ein anderes Übertragungsverhältnis bereitgestellt wird, insbesondere eine andere Umsetzung bzw. Übersetzung. Beispielsweise kann bei einer Eins-zu-Zwei-Umsetzung eine eingangsseitige Translationsbewegung in den doppelten (Stecken)wert einer Translationsbewegung umgesetzt. Es kann auch vorgesehen sein, die Bewegungsübertragungseinrichtung so auszubilden, dass eine eingangsseitig erfasste translatorische Bewegung in eine rotatorische Bewegung ausgangsseitig der Bewegungsübertragungseinrichtung umgesetzt wird.

Um insbesondere bei Anwendungen, bei welchen der bewegliche Abschnitt eines Tragelements über die erfindungsgemäße Positionsanzeigevorrichtung angezeigt wird, und die Bewegung eine Hin- und Herbewegung darstellt, kann zweckmäßigerweise vorgesehen sein, dass die Bewegungsübertragungseinrichtung ein zur Übertragung von Zug- und Druckkräften ausgebildetes Maschinenelement, insbesondere einen Zug- und Druckkräfte übertragenden Bowdenzug umfasst. Vorzugsweise kann ein solcher Bowdenzug eine Zug- und Druckkräfte übertragende Drahtseele, insbesondere eine Stahldrahtseele umfassen.

Die radial außen zum Hohlzylinder angeordnete und axial zu diesem verschiebbar gelagerte Extremwertanzeige kann ein erstes Ringelement aufweisen, das den Hohlzylinder umgreift, sodass sich der Hohlzylinder durch das Ringelement hindurch erstreckt, wobei das Ringelement zum Hohlzylinder axial verschieblich angeordnet sein kann. Dabei kann vorgesehen sein, dass das Ringelement und Mitnehmer so angeordnet sind, dass der Mitnehmer je nach axialer Stellung innerhalb des Hohlzylinders das auf dem Hohlzylinder axial bewegliche Ringelement bewegt. Um bei einer Hin- und Herbewegung des beweglichen Abschnitts des Tragelements eine jeweilige Extremwertanzeige in beide Richtungen zu ermöglichen, kann zweckmäßigerweise vorgesehen sein, dass die Extremwertanzeige zumindest ein zweites Ringelement aufweist, dass den Hohlzylinder insbesondere wie das erste Ringelement umgreift und zu diesem unabhängig von dem ersten Ringelement axial zum Hohlzylinder verschieblich angeordnet ist.

Zur zumindest abschnittsweise axialen Aufnahme des Querbolzens in dem zumindest einen Ringelement kann zweckmäßigerweise vorgesehen sein, dass das zumindest eine Ringelement an einer dem Mitnehmer zugewandten Stirnseite eine axiale Ausnehmung zur zumindest abschnittsweisen Aufnahme des Querbolzens in axialer Richtung aufweist, insbesondere zur Festlegung einer Null-Lage der Extremwertanzeige. In ähnlicher Weise kann vorgesehen sein, dass sowohl das erste als auch das zweite Ringelement an einer dem Mitnehmer zugewandten Stirnseite eine axiale Ausnehmung zur zumindest abschnittsweisen Aufnahme des Querbolzens in axialer Richtung aufweisen, insbesondere derart, dass eine Betriebsstellung einstellbar ist, bei welcher die Ringelemente in einer vorgegebenen Betriebsstellung an zugeordneten Stirnseiten insbesondere auf Kontakt zueinander bewegt angeordnet sein können zur Einstellung einer Null- oder Ausgangsposition des ersten und/oder zweiten Ringelements als Teile der Extremwertanzeige der erfindungsgemäßen Positionsanzeigevorrichtung.

Zur Mitnahme bzw. Weiterschiebung des ersten und/oder zweiten Ringelements axial zum Hohlzylinder kann vorgesehen sein, dass der Grund der axialen Ausnehmung des ersten und/oder zweiten Ringelements eine axiale Anschlagsfläche für den Querbolzen bereitstellt. Diese Anschlagsfläche kann als Kontaktfläche für den Querbolzen des Mitnehmers ausgebildet sein, um das jeweilige Ringelement in eine vom Mitnehmer abhängige Position zur Anzeige eines neuen Extremwerts ausgebildet sein.

Zur Abstützung des jeweiligen Ringelements an dem Hohlzylinder kann das erste und/oder zweite Ringelement an einer jeweiligen radialen Innenseite ein Gleitlagerelement aufweisen, insbesondere um eine Reibung zwischen Ringelement und einer Außenmantelfläche des Hohlzylinders gering zu halten zur leichten Verschiebbarkeit des jeweiligen Ringelements an dem Hohlzylinder. Zweckmäßigerweise kann vorgesehen sein, dass das Ringelement eine zylindermantelförmige Anlagefläche bereitstellt, die an einer zylindermantelförmigen Anlagefläche des Hohlzylinders anliegt. Es liegt jedoch im Rahmen der Erfindung auch andere aufeinander abgestimmte, zugeordnete Anlageflächen, insbesondere zugeordnete eckige Anlageflächen, von Ringelement und Hohlzylinder vorzusehen. Um eine Verkantung des jeweiligen Ringelements bei der axialen Verschiebung zum Hohlzylinder zu vermeiden, kann zweckmäßigerweise vorgesehen sein, dass das erste und/oder zweite Ringelement an einer jeweiligen radialen Innenseite zumindest zwei axial beabstandete Gleitlagerelement aufweist. Es kann vorgesehen sein, dass zumindest eines der zumindest zwei axial beabstandeten Gleitlagerelemente eine Schmutzabstreiferfunktionalität aufweisen kann zur Aufrechterhaltung eines vorgegebenen geringen Reibungskoeffizienten zwischen dem jeweiligen Ringelement und dem Hohlzylinder über die gesamte Betriebszeit der Vorrichtung.

Um das zumindest eine radial außen zum Hohlzylinder angeordnete Ringelement bzw. die Extremwertanzeige gegen äußere Einflüsse, beispielsweise Schmutz und zur Aufrechterhaltung ihrer Funktionalität zu sichern, kann zweckmäßigerweise vorgesehen sein, dass der Hohlzylinder mit darin aufgenommenem Mitnehmer sowie die Extremwertanzeige in einem transparenten Zylinder angeordnet sind. Insofern kann dieser als Schutzrohr wirkende transparente Zylinder radial außen zu den genannten Bauteilen angeordnet sein und diese aufnehmen. Beispielsweise kann das Schutzrohr aus einem transparenten Kunststoff oder auch aus einem Glasmaterial gebildet sein. Grundsätzlich kann die Außenmantelfläche des Mitnehmers an die Innenmantelfläche des Hohlzylinders zur Optimierung eines geometrisch angepasst sein, insbesondere in der Art einer Spielpassung, um eine leichte Verschiebbarkeit des Mitnehmers im Hohlzylinder bereitzustellen. Zweckmäßigerweise kann der Mitnehmer mit einer zylinderartigen Außenmantelfläche ausgebildet sein, der an einer der Bewegungsübertragungseinrichtung zugewandten Stirnseite ein Befestigungselement zur Befestigung des Mitnehmers an der Bewegungsübertragungseinrichtung aufweisen kann, wobei an der der Bewegungsübertragungseinrichtung abgewandten Stirnseite der Querbolzen angeordnet sein kann. Beispielsweise kann das Befestigungselement als sich quer bzw. radial erstreckende Klemmschraube ausgebildet sein, um die Bewegungsübertragungseinrichtung, beispielsweise ein Bowdenzug, endseitig am Mitnehmer zu befestigen. Erfindungsgemäß können auch andere Befestigungsverfahren zur Befestigung der Bewegungsübertragungseinrichtung an dem Mitnehmer Verwendung finden, beispielsweise Verschweißen, Verlöten oder Verkleben. Es sei darauf hingewiesen, dass Hohlzylinder, Ringelemente und/oder transparenter Zylinder nicht in allen Ausführungsformen einen kreisförmigen Querschnitt aufweisen müssen. Stattdessen sind auch eckige oder anders gekrümmte Querschnitte im Rahmen der Erfindung möglich.

Es kann vorgesehen sein, den Hohlzylinder und/oder das Schutzrohr an einer oder an beiden Stirnseiten mittels Abschlussplatten abzuschließen. Die Gestaltung des Hohlrohrs kann derart ausgeführt sein, dass es an einer seiner Stirnseiten in einen Tragabschnitt übergeht zur Befestigung der erfindungsgemäßen Positionsanzeigevorrichtung an einem Bauelement. Beispielsweise kann dieser Tragabschnitt ein Gewindezapfen oder ein Gewindezapfenabschnitt sein, über welchen die Positionsanzeigevorrichtung mittels einer Mutter an einem Bauelement befestigt sein kann.

Zur Einführung der Bewegungsübertragungseinrichtung in das Innere des Hohlzylinders zur Befestigung an dem Mitnehmer kann zweckmäßigerweise vorgesehen sein, dass an einer Stirnseite des Hohlrohrs eine mit einer Durchgangsbohrung versehene Abschlussplatte angeordnet ist, welche den Hohlraum des Hohlzylinders stirnseitig abschließt, wobei sich in Einbaulage die Bewegungsübertragungseinrichtung, insbesondere ein Bowdenzug durch die Durchgangsbohrung hindurch erstrecken kann.

Zweckmäßigerweise kann vorgesehen sein, dass der transparente Zylinder bzw. das Schutzrohr jeweils stirnseitig abgeschlossen sind, insbesondere mittels einer oder mehrerer schon beschriebener Abdeckscheiben bzw. den Tragabschnitt, sodass ein im Wesentlichen geschlossener Hohlraum gebildet ist, innerhalb dessen der Hohlzylinder, der innerhalb des Hohlzylinders axial beweglich aufgenommene Mitnehmer sowie die radial außen zum Hohlzylinder angeordnete und axial verschiebbare Extremwertanzeige, insbesondere in Form eines ersten und/oder eines zweiten Ringelements, angeordnet sein können.

Zweckmäßigerweise kann stirnseitig zum Hohlzylinder und/oder zum transparenten Zylinder ein Sicherheitselement angeordnet sein zur Anzeige der Durchführung eines Öffnungsvorganges an der erfindungsgemäßen Positionsanzeigevorrichtung. Dieses Sicherungselement kann beispielsweise ein mit zwei Montagebohrungen versehener Sicherungsring sein, durch dessen beide Montagebohrungen ein verplombter Draht geführt sein kann, zum Sichtbarmachen einem nichtautorisierten Öffnen der erfindungsgemäßen Positionsanzeigevorrichtung.

Zur Bereitstellung einer Nullpunktanzeige kann am Schutzrohr bzw. am transparenten Zylinder ein entsprechender Indikator, z.B. als Aufkleber, angebracht sein, insbesondere an der Außenmantelfläche des transparenten Zylinders.

Die Erfindung wird im Folgenden durch das Beschreiben einer Ausführungsform nebst Abwandlungen unter Bezugnahme auf die beiliegenden Figuren erläutert, wobei
- Figur 1: eine erfindungsgemäß gestaltete Positionsanzeigevorrichtung zur Verwendung mit einer entfernt angeordneten Stoßbremse,
- Figur 2: die in Figur 1 gezeigte Positionsanzeigevorrichtung in einer Längsschnittdarstellung,
- Figur 3: die in Figur 1 gezeigte Positionsanzeigevorrichtung in einer zur Darstellung der Figur 2 um 90° gedrehten Längsschnittdarstellung,
- Figur 4: die Schnittdarstellung der Figur 3 ohne Schutzrohr mit auf Kontakt und zur Anzeige einer Null-Position verschobenen Ringelementen, und
- Figur 5: eine zur Darstellung der Figur 1 weitere Anwendung der Positionsanzeigevorrichtung mit einer Stoßbremse zeigt.

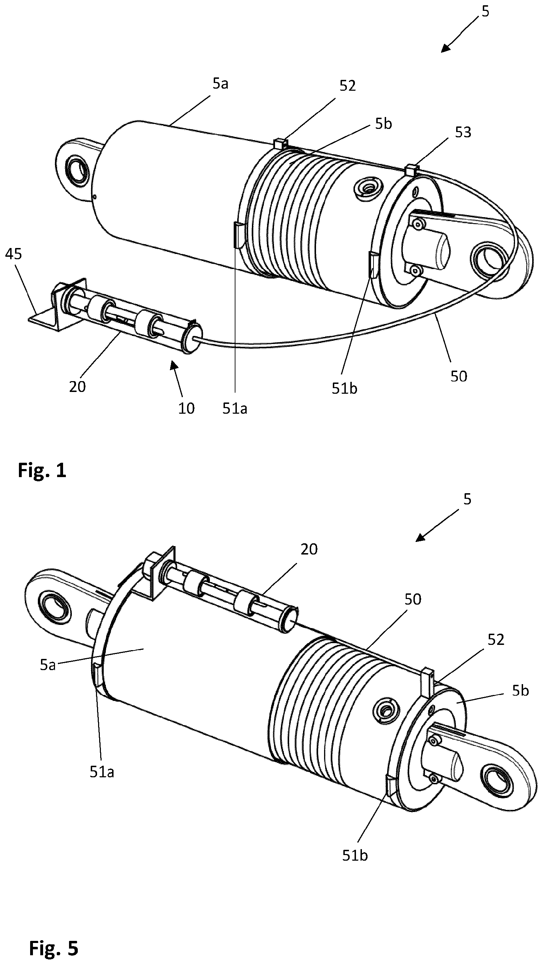

In Figur 1 ist eine erfindungsgemäß ausgebildete Positionsanzeigevorrichtung 10 dargestellt, die zur Anzeige der Bewegung eines beweglichen Abschnittes eines hier als Stoßbremse 5 ausgebildeten Tragelements ausgebildet ist. Eine solche Stoßbremse 5 wird beispielsweise in Anlagesystemen verwendet, um im Störfall zwischen dem zu sichernden Bauteil, beispielsweise einer Rohrleitung und der Umgebungsstruktur augenblicklich eine feste, annähernd starre Verbindung herzustellen, um auftretende, stoßartige Bewegungsenergie aufzunehmen und für die Rohrleitung schadfrei abzuleiten. Insbesondere temperaturbedingte Verschiebungen dürfen jedoch durch die Stoßbremse nicht verhindert werden. Aus diesem Grunde sind diese so ausgebildet, dass eine thermische Verschiebung während des planmäßigen Betriebs der Anlage durch die spezielle Funktionsweise der Stoßbremse frei von nennenswertem Widerstand bleiben. Bekannt sind beispielsweise Hydraulikstoßbremsen, deren Funktion durch ein in einem Hydraulikkolben axial angeordnetes Hauptsteuerventil geregelt wird. Bei langsamer Bewegung des Kolbens, beispielsweise bedingt durch eine thermische Verschiebung, wird das Ventil durch Federkraft offengehalten und die Hydraulikflüssigkeit kann ungehindert von einem Zylinderraum in einen anderen strömen. Bei schneller Bewegung des Kolbens oberhalb einer Grenzgeschwindigkeit, beispielsweise bedingt durch eine stoßartige, wie durch ein Erdbeben verursachte Bewegung des beweglichen Abschnittes der Stoßbremse, bewirkt ein auftretender Staudruck am Ventilteller das Schließen des Ventils, sodass der Hydraulikfluss unterbrochen und die Bewegung blockiert ist. Eine derartige, hydraulisch wirkende Stoßbremse ist beispielsweise in der Offenlegungsschrift EP 0 342 405 A1 beschrieben.

In der in Figur 1 dargestellten Stoßbremse 5 ist der mit dem Bezugszeichen 5a bezeichnete Abschnitt zur Längsachse verschieblich zum feststehenden Abschnitt 5b angeordnet, wobei in einer beispielhaften Anwendung zum Absichern einer Rohrleitung einer der beiden Abschnitte mit der Rohrleitung und der andere Abschnitt mit einer Tragstruktur über ihre jeweilige Befestigungslasche verbunden sind. Im Betrieb der Stoßbremse 5 der Figur 1 bewegt sich in der beschriebenen Ausführungsform die äußere Hülse des beweglichen Abschnitts 5a koaxial zu dem hier feststehenden Zylinderabschnitt 5b.

Zur Anzeige der relativen Position der beiden zueinander beweglichen Abschnitte 5a, b der Stoßbremse 5 ist eine erfindungsgemäß ausgebildete Positionsanzeigevorrichtung 10 vorgesehen, welche eine Anzeigeeinrichtung 20 aufweist, die über einen, eine Drahtseele aufweisenden Bowdenzug 50 mittels Verklemmung mit dem beweglichen Abschnitt 5a der Stoßbremse 5 bewegungsgekoppelt ist. Hierzu kann in der beschriebenen Ausführungsform ein Befestigungselement, beispielsweise eine Schlauchschelle 51a kraftschlüssig um die Hülse des beweglichen Abschnitts 5a angebracht sein, wobei an dem Befestigungselement ein Klemmelement 52 angeordnet ist, an welchem die Seele des Bowdenzugs 50 verklemmt ist, sodass der Bowdenzug mit dem beweglichen Abschnitt 5a bewegungsgekoppelt ist. Die Umhüllung des Bowdenzugs 50 kann in der beschriebenen Ausführungsform über ein Führungselement 53 verlaufen, das an dem hier feststehenden Abschnitt 5b der Stoßbremse 5 befestigt ist. Hierzu kann wiederum eine Schlauchschelle 51b vorgesehen sein, die an dem hier zylinderförmigen Außenmantel des feststehenden Abschnitts 5b der Stoßbremse 5 kraftschlüssig befestigt ist. Bei einer relativen Bewegung des beweglichen Abschnitts 5a zum feststehenden Abschnitt 5b der Stoßbremse 5 verändert sich damit die Längserstreckung des Bowdenzugs zwischen dem Klemmelement 52 und dem Führungselement 53, was durch die Bewegungskopplung zwischen Bewegungsübertragungseinrichtung bzw. Bowdenzug und einem Mitnehmer an der Anzeigeeinrichtung 20 angezeigt wird.

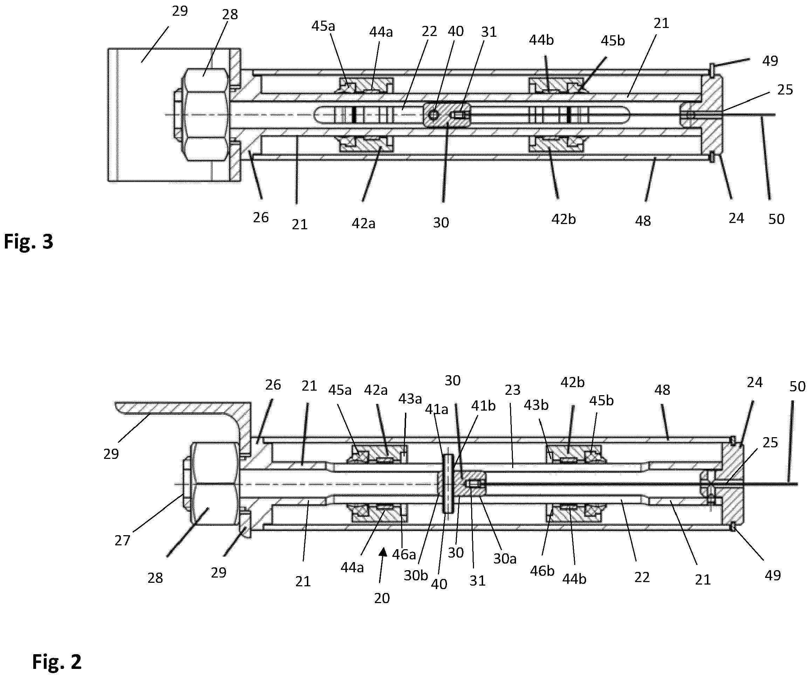

Hierzu kann die an den Bowdenzug 50 angekoppelte Anzeigeeinrichtung erfindungsgemäß ausgebildet sein, worauf im Folgenden mit Bezug auf die Darstellungen der Figuren 2 bis 4 eingegangen wird. Figur 2 zeigt die Anzeigeeinrichtung 20 der Figur 1 mit angekoppeltem Bowdenzug 50 in einer Längsschnittdarstellung. Die Anzeigeeinrichtung 20 umfasst in der beschriebenen Ausführungsform einen Hohlzylinder 21, der hier sowohl innenmantelseitig als auch außenmantelseitig kreisförmig bzw. zylinderförmig ausgebildet sein kann. Dieser Hohlzylinder erstreckt sich im Wesentlichen über die gesamte Längserstreckung der Anzeigeeinrichtung 20. Innerhalb des Hohlzylinders 21 ist ein hier zylinderförmiger Mitnehmer 30 angeordnet, dessen Außendurchmesser an den Innendurchmesser des Hohlzylinders 21 angepasst ist, derart, dass der Mitnehmer 30, beispielsweise im Rahmen einer Spielpassung innerhalb des Hohlzylinders axial verschieblich angeordnet ist. Der Mitnehmer 30 weist einen zum Bowdenzug 50 hingewandten Längsabschnitt 30a auf, in welchem der Mitnehmer eine Klemmbohrung 31 umfasst, in der die sich in den Innenraum des Hohlzylinders 21 erstreckende Seele des Bowdenzugs 50 verklemmt sein kann, beispielsweise mittels einer radial verlaufenden und in den Figuren nicht dargestellten Madenschraube.

An dem zum erstgenannten längsseitigen Abschnitt 30a gegenüberliegenden längsseitigen Abschnitt 30b des Mitnehmers 30 kann dieser in der beschriebenen Ausführungsform einen Querbolzen 40 umfassen, der sich durch eine radiale Durchführung durch den Mitnehmer 30 beidseitig hindurch erstreckt und von diesem bei der mittels der Seele des Bowdenzugs 50 vermittelten Bewegung vom Mitnehmer 30 mitgeführt wird.

Während in der beschriebenen Ausführungsform der Hohlzylinder 21 an seinem dem Bowdenzug zugewandten Stirnseite mittels einer Abschlussscheibe 24, die eine Bohrung 25 zum Durchführen des Bowdenzugs 50 aufweist, abgeschlossen ist, kann der Hohlzylinder 21 an seiner gegenüberliegenden Stirnseite eine weitere, vom Hohlzylinder getrennt hergestellte Abschlussscheibe oder wie in der beschriebenen Ausführungsform integral mit dem Hohlzylinder 21 hergestellte Abschlussscheibe 26 umfassen. Wie beispielsweise aus Figur 2 ersichtlich, kann in der beschriebenen Ausführungsform diese integrale Abschlussscheibe 26 in einen Gewindezapfen 27 übergehen, der zur Befestigung der Anzeigeeinrichtung mittels einer Befestigungsmutter 28 und einem zugeordneten Befestigungs- oder Flanschelement 29 dienen kann.

Wie darüber hinaus beispielsweise aus Figur 2 hervorgeht, weist die Anzeigeeinrichtung 20 ferner zwei zu beiden Längsseiten des Mitnehmers 30 angeordnete und an der Außenmantelfläche des Hohlzylinders 21 verschieblich angeordnete Ringelemente 42a, b auf, die in noch zu beschreibender Weise als Extremwert-Positionsanzeige innerhalb der Anzeigeeinrichtung 20 angeordnet sind.

Zur Wechselwirkung des Mitnehmers 30 mit den beiden, jeweils zu einer Längsseite angeordneten Ringelementen 42a, b stellen diese jeweils an ihrer in Einbaulage dem Mitnehmer zugewandten Stirnseiten jeweils eine Anschlagsfläche 46a, b bereit, die in der beschriebenen Ausführungsform eine Grundfläche einer axialen Ausnehmung 43a, b darstellt. Diese Anschlagsflächen 46a, b wirken je nach Auslenkung des Mitnehmers 30 mit zugeordneten Anschlagsflächen bzw. Axialflächen 41a, b des Mitnehmers 30 zusammen zum Verschieben der Positionsextremwerte anzeigenden Ringelemente 42a, b. Die axiale Erstreckung der Ausnehmungen 43a, b sind an die axiale Erstreckung des Querbolzens 40 angepasst, derart, dass bei einem Aufeinanderzubewegen der beiden Ringelemente 42a, b bis zum Kontakt der einander zugewandten Stirnflächen, der Querbolzen 40 vollständig in den beiden, im besagten Betriebszustand einen Hohlraum ausbildenden Ausnehmungen 43a, b aufgenommen ist, worauf untenstehend nochmals eingegangen wird.

Um die gesamte Anzeigeeinrichtung 20 der erfindungsgemäßen Positionsanzeigevorrichtung 10 gegen äußere Einwirkungen wie Staub und darüber hinaus gegen Manipulationsversuche zu sichern, kann bei der erfindungsgemäßen Positionsanzeigevorrichtung vorgesehen sein, einen transparenten Hohlzylinder oder Schutzzylinder, hier einen Glaszylinder 48 anzuordnen, welcher radial den Hohlzylinder mit darin angeordnetem Mitnehmer und radial aus diesem herausragenden Querbolzen sowie die radial zum Hohlzylinder 30 und zu diesem verschiebbar angeordneten Ringelemente 42a, b aufnimmt. Dabei können die Abschlussscheiben 24, 26 Anlageflächen für den Glaszylinder 48 bereitstellen, sodass ein im Wesentlichen abgeschlossener Hohlraum vorliegt, innerhalb dessen die beschriebenen Anzeigeelemente bewegbar angeordnet sind, die direkt (Mitnehmer) bzw. indirekt über den Mitnehmer (Ringelemente) durch den Bowdenzug 50 bewegbar angeordnet sind.

Figur 3 zeigt die in Figur 2 angegebene Anzeigeeinrichtung 20 um 90° zur Achse des Hohlzylinders 21 so gedreht, dass der stabförmige Querbolzen 40 senkrecht zur Zeichenebene verläuft, wobei die Darstellung eine vollständige Sicht auf den Längsschlitz 23 freigibt, welcher radial gegenüberliegend zum verdeckten Längsschlitz 22 angeordnet ist, siehe Figur 2. Erkennbar ist in der beschriebenen Ausführungsform der Querbolzen im Querschnitt kreisförmig ausgebildet, dieser kann jedoch auch anders geformt sein, insbesondere mehreckig.

Zur Sicherung der Anzeigeeinrichtung 20 kann in der beschriebenen Ausführungsform ein Sicherungsring 49 in einer, in die Abschlussscheibe 24 geformten radialen Nut so angeordnet und eingesetzt sein, dass der Sicherungsring das Abziehen des Glaszylinders 48 in axialer Richtung blockiert. Eine Manipulation der Anzeige kann beispielsweise dadurch verhindert werden, dass durch die in den Figuren nicht dargestellten Montagelöcher des Sicherungsrings ein Sicherungsdraht geführt und verplombt ist.

Zur Vermeidung einer Verkantung der Ringelemente 42a, b auf der Außenmantelfläche des Hohlzylinders 21 kann vorgesehen sein, zur Anlage an die Außenmantelfläche des Hohlzylinders ausgebildete und axial zueinander beabstandete ringförmige Gleitlagerelemente 44a, 45a bzw. 44b, 45b vorzusehen. Dabei kann zumindest einer der beiden Gleitlagerelemente, in der beschriebenen Ausführungsform die Gleitlagerelemente 45a, b als Schmutzabstreifer ausgebildet sein, um eventuelle Ablagerungen auf der Außenmantelfläche des Hohlzylinders 21 abzustreifen bzw. zu vermeiden.

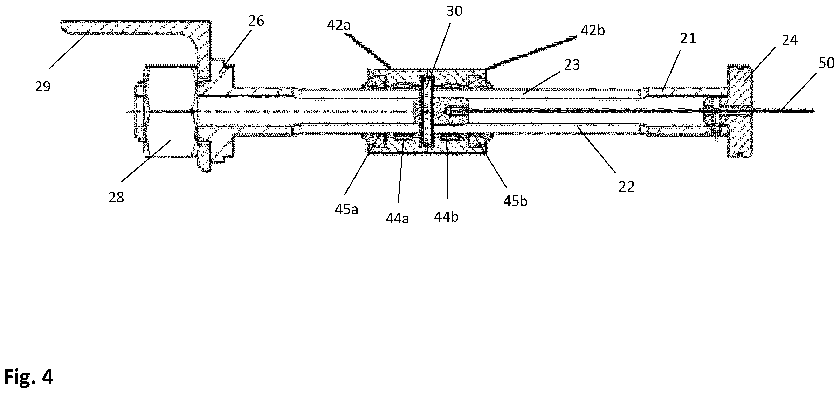

Figur 4 stellt eine Situation bei der Einstellung bzw. NullStellung der erfindungsgemäßen Positionsanzeigevorrichtung dar, wobei davon ausgegangen wird, dass sich die Position des beweglichen Abschnittes des Tragelements, hier der Stoßbremse 5, in Ruhelage befindet. Dabei wurde durch Entfernen des Sicherungsrings 49 und Abziehen des Schutzrohrs 48 der Mitnehmer durch entsprechendes Anbringen des Bodenzugs am beweglichen Abschnitt 5a der Stoßbremse, siehe Figur 1, so befestigt, dass sich der Mitnehmer 30 bzw. der Querbolzen 40 in einer, der aktuellen Position der Stoßbremse entsprechenden Position der Anzeigeeinrichtung 20 befindet. Mit Bezug auf die Darstellung der Figur 2 werden dann die beiden Ringelemente 42a, b auf den Mitnehmer 30 zubewegt, bis die diese sich stirnseitig berühren, wobei der Querbolzen 40 vollständig durch die axialen Ausnehmungen 43a, b aufgenommen sind. Die in Figur 4 angegebene gegenseitige Lage von Mitnehmer 30 und Extremwerte der Bewegung des Mitnehmers anzeigende Ringelemente 42a, b stellt damit eine Ausgangs- bzw. Null-Position dar, bei welcher sich das Tragelement, hier die Stoßbremse, in einer Montageposition befindet. Danach kann das Schutzrohr 48 wieder montiert und die Sicherung durch Aufspannen des Sicherungsrings 49 durchgeführt werden. Zur Kennzeichnung dieser Null-Position kann zweckmäßigerweise eine entsprechende Markierung auf den transparenten Schutzrohr 48 aufgebracht werden, beispielsweise durch Aufkleben. In ähnlicher Weise kann eine Skalierung auf das Schutzrohr aufgebracht werden zum Ablesen der Momentanposition und/oder der Extremwertpositionen. Nach Durchführung der beschriebenen Justage ist die erfindungsgemäße Positionsanzeigevorrichtung einsatzfähig.

Figur 5 zeigt ein weiteres Anwendungsbeispiel, bei dem im Unterschied zu der Ausführungsform der Figur 1 die hierzu identisch aufgebaute erfindungsgemäße Positionsanzeigevorrichtung nicht entfernt zum identisch aufgebauten Stoßbremse angeordnet ist, sondern direkt auf der Stoßbremse, wobei die Positionsanzeigevorrichtung entweder an dem beweglichen Abschnitt oder an dem unbeweglichen Abschnitt der Stoßbremse befestigt sein kann, während die endseitige Verklemmung der Seele des Bowdenzugs an dem jeweils anderen Abschnitt der Stoßbremse 5 erfolgt zur beschriebenen Positionsanzeige an der Anzeigeeinrichtung 20 der Positionsanzeigevorrichtung.

### Bezugszeichenliste

- 10: Positionsanzeigevorrichtung
- 5: Stoßbremse
- 5a: Beweglicher Abschnitt
- 5b: Feststehender Abschnitt
- 20: Anzeigeeinrichtung
- 21: Hohlzylinder
- 22: Längsschlitz
- 23: Längsschlitz
- 24: Abschlussscheibe
- 25: Bohrung
- 26: Abschlussscheibe
- 27: Gewindezapfen
- 28: Befestigungsmutter
- 29: Flanschelement, Befestigungselement
- 30: Mitnehmer
- 30a: Längsseitiger Abschnitt
- 30b: Längsseitiger Abschnitt
- 31: Klemmbohrung
- 40: Querbolzen
- 41a, b: Anschlagsfläche
- 42a, b: Ringelement
- 43a, b: Axiale Ausnehmung
- 44a, b: Ringförmiges Gleitlagerelement
- 45a, b: Ringförmiges Gleitlagerelement
- 46a, b: Grund, Anschlagsfläche
- 48: Glaszylinder, Schutzrohr
- 49: Sicherungsring
- 50: Bowdenzug
- 51a, b: Schlauchschelle
- 52: Klemmelement
- 53: Führungselement

## Patentansprüche

1. Positionsanzeigevorrichtung (10) zur Anzeige der Bewegung eines, relativ zu einem feststehenden Abschnitt beweglichen Abschnitts eines Tragelementes, insbesondere eines Feder- oder Konstanthängers, einer Stoßbremse (5), eines Schwingungsdämpfers und/oder einer Gelenkstrebe, umfassend
- eine mechanische Bewegungsübertragungseinrichtung, die eingangsseitig an das Tragelement befestigbar ist zur Übertragung der Bewegung des beweglichen Abschnitts (5a) des Tragelementes;
- eine Anzeigeeinrichtung (20) zur Anzeige der Bewegung des beweglichen Abschnittes (5a) des Tragelements, wobei die Bewegungsübertragungseinrichtung ausgangsseitig an die Anzeigeeinrichtung (20) angekoppelt ist und die Anzeigeeinrichtung (20) einen Hohlzylinder (21) und einen in dem Hohlzylinder beweglich gelagerten und mit der Bewegungsübertragungseinrichtung bewegungsgekoppelten Mitnehmer (30) aufweist, und wobei der Hohlzylinder (21) einen Längsschlitz (22) aufweist, in welchem sich ein mit dem Mitnehmer (30) mitbewegter, radial nach außen verlaufender Querbolzen (40) erstreckt, der ausgebildet ist, zumindest eine radial außen zum Hohlzylinder (21) angeordnete Extremwertanzeige zu verschieben.

2. Positionsanzeigevorrichtung (10) nach Anspruch 1, **dadurch gekennzeichnet, dass** der Hohlzylinder (21) einen weiteren Längsschlitz (23) aufweist, der radial gegenüberliegend zum ersten Längsschlitz (22) angeordnet ist, wobei sich der Querbolzen (40) radial durch beide Längsschlitze (22, 23) erstreckt.

3. Positionsanzeigevorrichtung (10) nach Anspruch 1 oder 2, **dadurch gekennzeichnet, dass** die Bewegungsübertragungseinrichtung zur Befestigung an dem beweglichen Abschnitt des Tragelements ausgebildet ist.

4. Positionsanzeigevorrichtung (10) nach Anspruch 1, 2 oder 3, **dadurch gekennzeichnet , dass** die Bewegungsübertragungseinrichtung eingerichtet ist, eine eingangsseitig abgegriffene Translationsbewegung in eine ausgangsseitige Translationsbewegung zu übertragen.

5. Positionsanzeigevorrichtung (10) nach einem der Ansprüche 1 bis 4, **dadurch gekennzeichnet, dass** die Bewegungsübertragungseinrichtung ein zur Übertragung von Zug- und Druckkräften ausgebildetes Maschinenelement, insbesondere einen Zug- und Druckkräfte übertragenden Bowdenzug (50) umfasst.

6. Positionsanzeigevorrichtung (10) nach einem der Ansprüche 1 bis 5, **dadurch gekennzeichnet, dass** die Extremwertanzeige zumindest ein erstes Ringelement (42a) aufweist, dass den Hohlzylinder (21) umgreift und zu diesem axial verschieblich angeordnet ist, wobei vorzugsweise
die Extremwertanzeige zumindest ein zweites Ringelement (42b) aufweist, dass den Hohlzylinder (21) umgreift und zu diesem unabhängig von dem ersten Ringelement (42a) axial zum Hohlzylinder (21) verschieblich angeordnet ist.

7. Positionsanzeigevorrichtung (10) nach Anspruch 6, **dadurch gekennzeichnet, dass** das erste und/oder das zweite Ringelement (42a, b) an einer dem Mitnehmer (30) zugewandten Stirnseite eine axiale Ausnehmung (43a, b) zur zumindest abschnittsweisen Aufnahme des Querbolzens (40) in axialer Richtung aufweist, wobei vorzugsweise
der Grund der axialen Ausnehmung (43a, b) des ersten und/oder zweiten Ringelements (42a, b) eine axiale Anschlagsfläche für den Querbolzen (40) bereitstellt.

8. Positionsanzeigevorrichtung (10) nach einem der Ansprüche 6 oder 7, **dadurch gekennzeichnet, dass** das erste und/oder das zweite Ringelement (42a, b) an einer radialen Innenseite ein Gleitlagerelement (44a, b; 45a, b) aufweist zur Abstützung des Ringelements an dem Hohlzylinder (21), wobei vorzugsweise
das erste und/oder das zweite Ringelement (42a, b) an einer radialen Innenseite zumindest zwei axial beabstandete Gleitlagerelemente (44a, b; 45a, b) aufweist, wobei zumindest eines der zumindest zwei axial beabstandeten Gleitlagerelemente eine Schmutzabstreiferfunktionalität aufweisen kann.

9. Positionsanzeigevorrichtung (10) nach einem der Ansprüche 1 bis 8, **dadurch gekennzeichnet, dass** der Hohlzylinder (21) mit darin aufgenommenem Mitnehmer (30) sowie die Extremwertanzeige in einem, insbesondere transparenten, Schutzrohr (48) angeordnet sind.

10. Positionsanzeigevorrichtung (10) nach einem der Ansprüche 1 bis 9, **dadurch gekennzeichnet, dass** der Mitnehmer (30) mit einer zylinderartigen Außenmantelfläche gestaltet ist, der an einer der Bewegungsübertragungseinrichtung zugewandten Stirnseite ein Befestigungselement zur Befestigung an der Bewegungsübertragungseinrichtung aufweist, wobei an der der Bewegungsübertragungseinrichtung abgewandten Stirnseite der Querbolzen (40) angeordnet ist.

11. Positionsanzeigevorrichtung (10) nach einem der Ansprüche 1 bis 10, **dadurch gekennzeichnet, dass** das Hohlrohr (21) an einer Stirnseite in einen Tragabschnitt übergeht zur Befestigung der Positionsanzeigevorrichtung (10) an einem Bauelement.

12. Positionsanzeigevorrichtung (10) nach einem der Ansprüche 1 bis 11, **dadurch gekennzeichnet, dass** an einer Stirnseite des Hohlrohrs eine mit einer Durchgangsbohrung versehene Abschlussplatte angeordnet ist, welche den Hohlraum des Hohlzylinders stirnseitig abschließt, wobei sich in Einbaulage die Bewegungsübertragungseinrichtung durch die Durchgangsbohrung hindurch erstreckt.

13. Positionsanzeigevorrichtung (10) nach Ansprüchen 9, 11 und 12, **dadurch gekennzeichnet, dass** das Schutzrohr jeweils stirnseitig an dem Tragabschnitt und der Abdeckscheibe anliegt und mit diesen einen Hohlraum bildet.

14. Trageinrichtung, insbesondere Stoßbremse (5), zum beweglichen Abstützen eines Bauelements wie einer Rohrleitung gegenüber einer feststehenden Lagerstelle, insbesondere einem Bauwerk, ferner umfassend eine Positionsanzeigevorrichtung (10) nach einem der Ansprüche 1 bis 13.

15. Verwenden einer Positionsanzeigevorrichtung nach einem der Ansprüche 1-13 zur Anzeige der Bewegung eines, relativ zu einem feststehenden Abschnitt beweglichen Abschnitts eines Tragelementes, insbesondere eines Feder-oder Konstanthängers, einer Stoßbremse (5), eines Schwingungsdämpfers und/oder einer Gelenkstrebe.

## Claims

1. Position-indicating device (10) for indicating the movement of a portion of a support element which is movable relative to a fixed portion, the support element being, in particular, a spring or constant hanger, a snubber (5), a vibration damper and/or an articulated strut, comprising
- a mechanical movement-transmitting device, which can be attached to the support element on the input side, for the transmission of the movement of the movable portion (5a) of the support element;
- an indicating device (20) for indicating the movement of the movable portion (5a) of the support element, wherein the movement-transmitting device is coupled to the indicating device (20) on the output side and the indicating device (20) has a hollow cylinder (21) and a driver (30) which is movably mounted in the hollow cylinder and is movement-coupled to the movement-transmitting device, and wherein the hollow cylinder (21) comprises a longitudinal slot (22) in which a radially outwardly extending transverse bolt (40) extends which is moved along with the driver (30) and which is designed to displace at least one extreme-value indicator arranged radially outside with respect to the hollow cylinder.

2. Position-indicating device (10) according to claim 1, **characterized in that** the hollow cylinder (21) has a further longitudinal slot (23) that is arranged radially opposite to the first longitudinal slot (22), wherein the transverse bolt (40) radially extends through both longitudinal slots (22, 23).

3. Position-indicating device (10) according to claim 1 or 2, **characterized in that** the movement-transmitting device is designed for fastening to the movable portion of the support element.

4. Position-indicating device (10) according to claim 1, 2 or 3, **characterized in that** the movement-transmitting device is arranged to transmit a translation movement picked up at the input side into an output-side translation movement.

5. Position-indicating device (10) according to any one of claims 1 to 4, **characterized in that** the movement-transmitting device comprises a machine element designed for transmitting tensile and compressive forces, in particular a Bowden cable (50) transmitting tensile and compressive forces.

6. Position-indicating device (10) according to any one of claims 1 to 5, **characterized in that** the extreme-value indicator comprises at least one ring element (42a) which surrounds the hollow cylinder (21) and is arranged so as to be axially displaceable with respect to the latter, whereby preferably the extreme-value indicator comprises at least one second ring element (42b) which surrounds the hollow cylinder (21) and is arranged so as to be axially displaceable with respect to the hollow cylinder (21) independently of the first ring element (42a).

7. Position-indicating device (10) according to claim 6, **characterized in that** the first and/or second ring element (42a, b) has an axial recess (43a, b) on an end face facing the driver (30) for receiving the transverse bolt (40) at least in sections in the axial direction, whereby preferably the bottom of the axial recess (43a, b) of the first and/or the second ring element (42a, b) provides an axial stop surface for the transverse bolt (40).

8. Position-indicating device (10) according to any one of claims 6 or 7, **characterized in that** the first and/or the second ring element (42a, b) comprises a plain bearing element (44, b; 45a, b) on a radially inner side in order to support the ring element against the hollow cylinder (21), whereby preferably the first and/or the second ring element (42a, b) comprises at least two axially space plain bearing elements (44, b; 45a, b) on a radially inner side, wherein at least one of the at least two axially spaced plain bearing elements may have a dirt wiping functionality.

9. Position-indicating device (10) according to any one of claims 1 to 8, **characterized in that** the hollow cylinder (21) with the driver (30) accommodated therein and the extreme-value indicator are arranged in a protective tube (48), in particular a transparent one.

10. Position-indicating device (10) according to any of claims 1 to 9, **characterized in that** the driver (30) is configured with a cylinder-like outer surface having on an end face facing the movement-transmitting device a fastening element for fastening to the movement-transmitting device, wherein the transverse bolt (40) is arranged on the end face facing away from the movement-transmitting device.

11. Position-indicating device (10) according to any one of claims 1 to 10, **characterized in that** the hollow tube (21) merges on one end face into a support portion for fastening the position-indicating device (10) to a structural element.

12. Position-indicating device (10) according to any one of claims 1 to 11, **characterized in that** on one end face of the hollow tube an end plate provided with a through bore is arranged, which end plate closes the cavity of the hollow cylinder on the end face, wherein the movement-transmitting device extends through the through bore in the installed position.

13. Position-indicating device (10) according to any one of claims 9, 11 and 12, **characterized in that** the protective tube rests against the end face of the support portion and the cover plate and together with these forms a cavity.

14. Support device, in particular snubber (5), for movably supporting a structural element such as a pipeline against a fixed bearing position, in particular a building, further comprising a position-indicating device (10) according to any one of claims 1 to 13.

15. Use of a position-indicating device according to any one of claims 1-13 for indicating the movement of a movable portion of a support element relative to a fixed portion, in particular a spring or constant hanger, a snubber (5), a vibration damper and/or an articulated strut.

## Revendications

1. Dispositif indicateur de position (10) pour indiquer le mouvement d'une section mobile par rapport à une section fixe d'un élément porteur, en particulier d'un support à ressort ou d'un support constant, d'un amortisseur (5), d'un amortisseur de vibrations et/ou d'une barre d'articulation, comprenant
- un dispositif mécanique de transmission de mouvement qui peut être fixé côté entrée à l'élément porteur pour transmettre le mouvement de la section mobile (5a) de l'élément porteur;
- un dispositif indicateur (20) pour indiquer le mouvement de la section mobile (5a) de l'élément porteur, le dispositif de transmission de mouvement étant couplé côté sortie au dispositif indicateur (20) et le dispositif indicateur (20) présentant un cylindre creux (21) et un entraîneur (30) logé de manière mobile dans le cylindre creux et couplé en mouvement au dispositif de transmission de mouvement, et le cylindre creux (21) présentant une fente longitudinale (22) dans laquelle s'étend un boulon transversal (40) s'étendant radialement vers l'extérieur et se déplaçant avec l'entraîneur (30), boulon qui est conçu pour déplacer au moins un indicateur de valeurs extrêmes disposé radialement à l'extérieur par rapport au cylindre creux (21).

2. Dispositif indicateur de position (10) selon la revendication 1, **caractérisé en ce que** le cylindre creux (21) présente une autre fente longitudinale (23) qui est disposée radialement en face de la première fente longitudinale (22), le boulon transversal (40) s'étendant radialement à travers les deux fentes longitudinales (22, 23) .

3. Dispositif indicateur de position (10) selon la revendication 1 ou 2, **caractérisé en ce que** le dispositif de transmission de mouvement est conçu pour être fixé à la section mobile de l'élément porteur.

4. Dispositif indicateur de position (10) selon la revendication 1, 2 ou 3, **caractérisé en ce que** le dispositif de transmission de mouvement est agencé pour transmettre un mouvement de translation prélevé du côté de l'entrée en un mouvement de translation du côté de la sortie.

5. Dispositif indicateur de position (10) selon l'une quelconque des revendications 1 à 4, **caractérisé en ce que** le dispositif de transmission de mouvement comprend un élément de machine conçu pour transmettre des forces de traction et de compression, en particulier un câble Bowden (50) transmettant des forces de traction et de compression.

6. Dispositif indicateur de position (10) selon l'une des revendications 1 à 5, **caractérisé en ce que** l'indicateur de valeurs extrêmes présente au moins un premier élément annulaire (42a) qui entoure le cylindre creux et est disposé de manière à pouvoir se déplacer axialement par rapport à celui-ci, de préférence
l'indicateur de valeurs extrêmes présentant au moins un deuxième élément annulaire (42b) qui entoure le cylindre creux (21) et qui est disposé de manière à pouvoir être déplacé par rapport à celui-ci dans le sens axial par rapport au cylindre creux (21), indépendamment du premier élément annulaire (42a).

7. Dispositif indicateur de position (10) selon la revendication 6, **caractérisé en ce que** le premier et/ou le deuxième élément annulaire (42a, b) présente sur une face frontale tournée vers l'entraîneur (30) un évidement axial (43a, b) pour recevoir au moins par sections le boulon transversal (40) dans la direction axiale, de préférence
le fond de l'évidement axial (43a, b) du premier et/ou du deuxième élément annulaire (42a, b) fournissant une surface de butée axiale pour le boulon transversal (40).

8. Dispositif indicateur de position (10) selon l'une quelconque des revendications 6 ou 7, **caractérisé en ce que** le premier et/ou le deuxième élément annulaire (42a, b) présente sur un côté intérieur radial un élément de palier lisse (44a, b; 45a, b) pour l'appui de l'élément annulaire sur le cylindre creux (21), de préférence
le premier et/ou le deuxième élément annulaire (42a, b) présentant sur un côté intérieur radial au moins deux éléments de palier lisse (44a, b; 45a, b) espacés axialement, au moins l'un des au moins deux éléments de palier lisse espacés axialement pouvant présenter une fonction de raclage des saletés.

9. Dispositif indicateur de position (10) selon l'une quelconque des revendications 1 à 8, **caractérisé en ce que** le cylindre creux (21) avec l'entraîneur (30) qui y est logé ainsi que l'indicateur de valeurs extrêmes sont disposés dans un tube de protection (48), en particulier transparent.

10. Dispositif indicateur de position (10) selon l'une quelconque des revendications 1 à 9, **caractérisé en ce que** l'entraîneur (30) est conçu avec une surface d'enveloppe extérieure de type cylindrique qui présente sur une face frontale tournée vers le dispositif de transmission de mouvement un élément de fixation pour la fixation sur le dispositif de transmission de mouvement, le boulon transversal (40) étant disposé sur la face frontale opposée au dispositif de transmission de mouvement.

11. Dispositif indicateur de position (10) selon l'une quelconque des revendications 1 à 10, **caractérisé en ce que** le tube creux (21), sur un côté frontal, passe à une section porteur pour la fixation du dispositif indicateur de position (10) sur un élément de construction.

12. Dispositif indicateur de position (10) selon l'une quelconque des revendications 1 à 11, **caractérisé en ce qu'**une plaque de fermeture pourvue d'un trou traversant est disposée sur une face frontale du tube creux, laquelle plaque de fermeture ferme frontalement l'espace creux du cylindre creux, le dispositif de transmission de mouvement s'étendant à travers le trou traversant en position de montage.

13. Dispositif indicateur de position (10) selon les revendications 9, 11 et 12, **caractérisé en ce que** le tube de protection s'applique respectivement du côté frontal contre la section porteur et le disque de recouvrement et forme un espace creux avec ceux-ci.

14. Dispositif porteur, notamment amortisseur (5), pour supporter de manière mobile un élément de construction tel qu'une conduite par rapport à un point d'appui fixe, notamment une structure, comprenant en outre un dispositif indicateur de position (10) selon l'une quelconque des revendications 1 à 13.

15. Utilisation d'un dispositif indicateur de position selon l'une quelconque des revendications 1 à 13 pour indiquer le mouvement d'une section mobile par rapport à une section fixe d'un élément porteur, en particulier d'un support à ressort ou d'un support constant, d'un amortisseur (5), d'un amortisseur de vibrations et/ou d'une barre d'articulation.
